# FASCICULE DE BREVET EUROPEEN

(11) **EP 2 047 215 B1**
(45) Date de publication et mention de la délivrance du brevet: **30.06.2010**
(21) Numéro de dépôt: 07787674.6
(22) Date de dépôt: 18.07.2007
(51) Int. Cl.: G01C 23/00

(54) **SYSTEME COMPRENANT DEUX INSTRUMENTS COMBINES MONTE A BORD D'UN AERONEF ET PROCEDE METTANT EN OEUVRE LE SYSTEME**
SYSTEM MIT ZWEI AN BORD EINES FLUGZEUGS ANGEBRACHTEN KOMBINIERTEN INSTRUMENTEN UND DAS SYSTEM IMPLEMENTIERENDES VERFAHREN
SYSTEM COMPRISING TWO COMBINED INSTRUMENTS MOUNTED ON BOARD AN AIRCRAFT AND METHOD IMPLEMENTING THE SYSTEM

(30) Priorité: 04.08.2006 FR 0607172
(43) Date de publication de la demande: 15.04.2009
(73) Titulaire: THALES, 92200 Neuilly sur Seine (FR)
(72) Inventeur: CHESNE, Philippe, 41100 Vendome (FR); JAULAIN, Yves, 86140 Scorbe Clairvaux (FR)
(74) Mandataire: Collet, Alain
(86) Numéro de dépôt international: PCT/EP2007/057411
(87) Numéro de publication internationale: WO 2008/015102

(56) Documents cités:
- EP-A- 1 482 277
- FR-A1- 2 868 895
- FR-A1- 2 873 989
- US-A- 5 057 835

## Description

L'invention concerne les instruments d'aide au pilotage des aéronefs. Plus précisément, elle concerne les instruments de bord des aéronefs dont le pilotage nécessite, pour des raisons techniques ou pour des raisons réglementaires, la présence d'instruments de secours pour afficher des données de navigation essentielles dans le cas où les systèmes d'affichage principaux tombent en panne.

Dans un exemple typique, pour un aéronef commercial transportant des passagers, la planche de bord de l'aéronef comporte entre autres :
- un afficheur principal pour afficher avec une grande précision un horizon, une attitude de l'aéronef, et des données d'altitude, de cap, et de vitesse ; cet afficheur reçoit les informations calculées par un calculateur de l'avion à partir de données reçues de divers capteurs ;
- un instrument combiné de secours, (bien connu dans la littérature anglo-saxonne sous le nom de integrated electronics standby instrument) permettant l'affichage de paramètres de vol tel qu'un horizon, une altitude et une vitesse et éventuellement quelques autres données indépendamment du système principal, de manière plus sommaire et avec une précision plus faible. Les informations affichées sont calculées directement par l'instrument combiné qui affiche sur un même écran en couleur l'ensemble des informations de secours. Les capteurs associés à l'instrument combiné de secours tels que des capteurs de pression pour la mesure des pressions totale Pt et statique Ps de l'air entourant l'aéronef et des accéléromètres pour la détermination de l'attitude de l'aéronef sont habituellement intégrés dans cet instrument. En cas de panne du système d'affichage primaire, le pilote utilise les données des instruments de secours.

A ce jour, les planches de bord ne disposent que d'un seul instrument combiné de secours même lorsque l'aéronef est piloté par deux pilotes. L'instrument combiné de secours est placé au centre de la planche de bord et est utilisable par les deux pilotes. Avec l'apparition d'avions très gros porteur, les constructeurs d'aéronefs ont souhaité placer deux instruments combinés de secours utilisable chacun par l'un des deux pilotes.

Chaque instrument combiné de secours comportant ces propres capteurs, les paramètres de vol calculés par les deux instruments combinés de secours ne sont pas rigoureusement identiques et leur affichage simultané sur les deux instruments combinés de secours pourrait entraîner des confusions entre les deux pilotes. Pour éviter ce problème, on a utilisé un seul des instruments combinés de secours pour afficher les paramètres de vol, l'autre instrument combiné de secours affichant des paramètres de navigation tel que la route à suivre et des consignes de pilotage automatique de l'aéronef. Chaque instrument combiné de secours peut être configuré soit pour afficher les paramètres de vol soit pour afficher les paramètres de navigation. Lors de la reconfiguration d'un des instruments combinés de secours pour l'affichage des paramètres de vol, l'autre instrument est automatiquement reconfiguré vers l'affichage des paramètres de navigation pour éviter l'affichage simultané de paramètres de vol pouvant être différents. La reconfiguration automatique d'un des deux instruments combinés de secours par la manoeuvre de l'autre est obtenue par des moyens de communication entre les deux instruments combinés utilisant par exemple une liaison série réalisée au moyen d'un câble électrique reliant les deux instruments combinés de secours. Le protocole de transfert de donnée sur la liaison série utilise par exemple une norme de transmission de donnée numérique connue sous le nom de norme ARINC (Aeronautical Radio Incorporation situé 2251 River Road, ANNAPOLIS, MARILAND 21401 USA).

EP-A-1 482 277 décrit un système d'affichage de secours d'un aéronef présentant à la fois des informations de pilotage et des informations de navigation. Un système d'affichage similaire est connu du document FR-A1-2 873 989.

Dans la situation actuelle utilisant deux instruments combinés de secours, en cas de panne des capteurs d'un premier instrument combiné de secours et de panne de l'affichage du second instrument combiné de secours, aucune possibilité d'afficher les paramètres de vol ne subsiste alors que les informations sur les paramètres de vol restent disponibles.

L'invention vise à pallier ce problème en améliorant la disponibilité du système de secours.

A cet effet, l'invention a pour objet un système comprenant deux instruments combinés montés à bord d'un aéronef, et des moyens de communication entre les deux instruments combinés, chaque instrument combiné comportant des moyens autonomes de détermination des paramètres de vol, vitesse, altitude et attitude de l'aéronef et des moyens d'affichage soit des paramètres de vol soit de paramètres de navigation de l'aéronef, les moyens autonomes de détermination des paramètres de vol comportant des capteurs d'inertie et anémobarométriques, caractérisé en ce qu'il comprend en outre un module de sélection permettant de choisir, parmi les capteurs des deux instruments combinés, ceux retenus pour la détermination des paramètres de vol.

L'invention a également pour objet un procédé de détermination de paramètres de vol d'un aéronef sur un système comprenant deux instruments combinés montés à bord de l'aéronef, et des moyens de communication entre les deux instruments combinés, chaque instrument combiné comportant des moyens autonomes de détermination des paramètres de vol, vitesse, altitude et attitude de l'aéronef et des moyens d'affichage soit des paramètres de vol soit de paramètres de navigation de l'aéronef, les moyens autonomes de détermination des paramètres de vol comportant des capteurs d'inertie et anémobarométriques, caractérisé en ce qu'il consiste à sélectionner parmi les capteurs des deux instruments combinés, ceux retenus pour la détermination des paramètres de vol en fonction de leur disponibilité et à afficher sur les moyens d'affichage de l'un quelconque des instruments combinés ou des deux instruments combinés les paramètres de vol déterminés.

L'invention sera mieux comprise et d'autres avantages apparaîtront à la lecture de la description détaillée d'un mode de réalisation donné à titre d'exemple, description illustrée par le dessin joint dans lequel :
La figure 1 représente un système comprenant deux instruments combinés de secours ;
la figure 2 représente le système de la figure 1 dans lequel certains capteurs sont en panne ;
la figure 3 représente un autre cas de panne de capteurs du système de la figure 1 ;
la figure 4 représente un cas de panne où des capteurs d'un des instruments combinés de secours et l'afficheur de l'autre instrument combiné de secours sont en panne ;
la figure 5 représente de façon plus détaillée le système de la figure 1.

Par souci de clarté, les mêmes éléments porteront les mêmes repères dans les différentes figures.

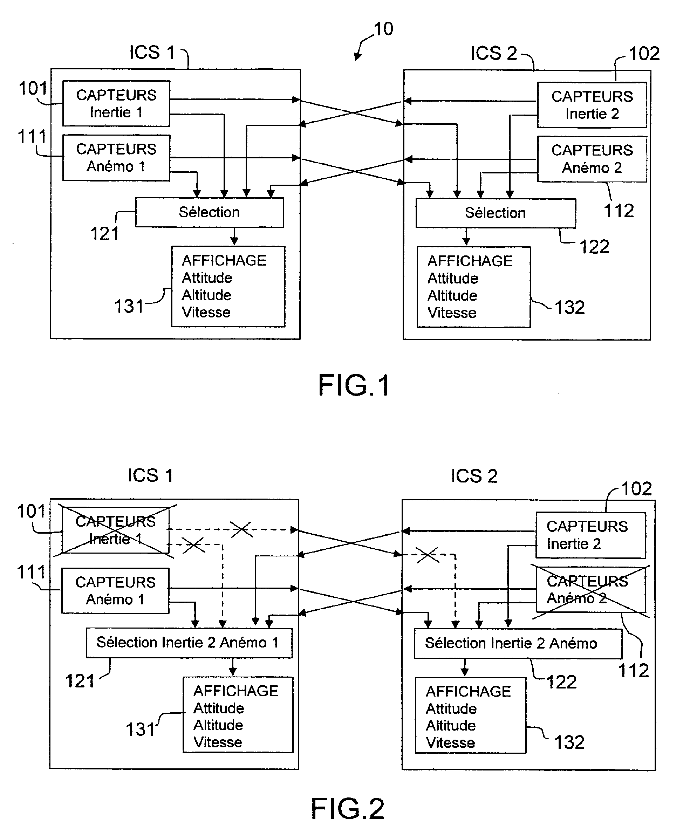

La figure 1 représente un système comprenant deux instruments combinés de secours ICS1 et ICS2 destinés à équiper une planche de bord d'aéronef gros porteur. Le système est habituellement utilisé en secours d'un système primaire équipant par ailleurs la planche de bord. Il est également possible de mettre en oeuvre le système de la figure 1, non pas comme système de secours, mais comme système primaire dans des aéronefs de plus petite capacité. Les instruments assurent alors par eux même la redondance des capteurs et de l'affichage. Les deux instruments ICS1 et ICS2 sont avantageusement identiques afin d'améliorer la standardisation de l'équipement de l'aéronef.

Chaque instrument combiné de secours ICS1 et ICS2 comporte des capteurs d'inertie 10i, i représentant le numéro de l'instrument combiné de secours 1 ou 2. Les capteurs d'inertie 101 et 102 peuvent comporter des accéléromètres ou une centrale inertielle. Les capteurs d'inertie 101 et 102 permettent à l'instrument combiné ICS1 ou ICS2 de déterminer l'attitude de l'aéronef.

Chaque instrument ICS1 et ICS2 comporte également des capteurs anémobarométriques 11i. Les capteurs anémobarométriques 111 et 112 sont reliés à des prises de pression non représentées sur la figure 1 et disposées sur la peau de l'aéronef. Les prises de pressions et les capteurs anémobarométriques 111 et 112 permettent de déterminer la pression statique Ps et la pression totale Pt de l'air entourant l'aéronef. A partir de ces pressions, l'instrument combiné ICS1 ou ICS2 détermine l'altitude et la vitesse de l'aéronef. L'altitude, la vitesse, et l'attitude de l'aéronef forment les paramètres de vol de l'aéronef. Les capteurs d'inertie 101 et 102 et anémobarométriques 111 et 112 ainsi qu'un calculateur associé forment des moyens de détermination des paramètres de vol. Ces moyens de détermination sont autonomes car ils appartiennent à l'instrument combiné de secours considéré et peuvent fonctionner sans autre information extérieure que celles provenant des prises de pression.

Chaque instrument combiné de secours ICS1 et ICS2 comporte des moyens d'affichage soit des paramètres de vol soit de paramètres de navigation de l'aéronef. Les paramètres de navigation sont des informations sur la route que l'aéronef doit suivre. Ces informations sont reçus d'autres systèmes équipant la planche de bord comme par exemple un pilote automatique de l'aéronef.

Le système comporte des moyens de communication 10 entre les deux instruments combinés de secours ICS1 et ICS2 utilisant par exemple une liaison série réalisée au moyen d'un conducteur électrique reliant les deux instruments combinés de secours ICS1 et ICS2. Par les moyens de communication 10, des informations reçues des capteurs d'inertie 101 ou 102 et anémobarométriques 111 ou 112 d'un des instruments ICS1 ou ICS2 sont véhiculées vers l'autre instrument. Chaque instrument ICS1 et ICS2 comporte un module de sélection 12i recevant les informations des capteurs des deux instruments soit directement soit par l'intermédiaire des moyens de communication 10. le module de sélection 11i choisit entre les capteurs des deux instruments les informations nécessaires pour la détermination des paramètres de vol. Plus précisément, le choix se fait en fonction de la disponibilité des différents capteurs.

Lorsque des capteurs équivalents sont disponibles sur les deux instruments combinés ICS1 et ICS2, la sélection se fait sur les capteurs d'un instrument combiné prédéfini. Autrement dit, lorsque deux capteurs permettant de mesurer un même paramètre appartenant chacun à un des instruments combinés de secours ICS1 ou ICS2, par exemple, un capteur anémobarométrique permettant de mesurer la pression totale Pt de l'air entourant l'aéronef, le choix du capteur est fait de façon arbitraire en privilégiant l'un des deux instruments combinés de secours ICS1 ou ICS2. Si au contraire, un des deux capteurs permettant de mesurer un même paramètre est en panne, le module de sélection prélève l'information nécessaire à la détermination des paramètres de vol à partir du capteur équivalent de l'autre instrument combiné de secours. En tout état de cause, deux capteurs équivalents ne sont jamais utilisés simultanément dans le système pour la détermination des paramètres de vol, ceci pour éviter tout risque de confusion.

Le système ne détermine les paramètres de vol qu'à partir d'une seule série de capteurs. Il est ainsi possible d'afficher simultanément sur les deux instruments combinés de secours les paramètres de vol. Une fois déterminés, les paramètres de vol sont affichés sur des moyens d'affichage 13i. Les moyens d'affichages 131 et 132 comportent par exemple un écran à cristaux liquides couleur formant la face avant de l'instrument combiné de secours considéré.

La figure 2 représente le système de la figure 1 dans lequel les capteurs d'inertie 101 de l'instrument combiné de secours ICS1 et les capteurs anémobarométriques 112 de l'instrument combiné de secours ICS2 sont en panne. Le module de sélection 121 ou 122 de chaque instrument combiné de secours prélève les informations nécessaires à la détermination des paramètres de vol sur les capteurs disponibles, à savoir les capteurs anémobarométriques 111 et les capteurs d'inertie 102. Ainsi, le système continue d'être en mesure de déterminer et d'afficher les paramètres de vol. Sans l'invention, les deux instruments combinés de secours pris isolément auraient été déclarés en panne et aucun n'aurait pu afficher les paramètres de vol de l'aéronef.

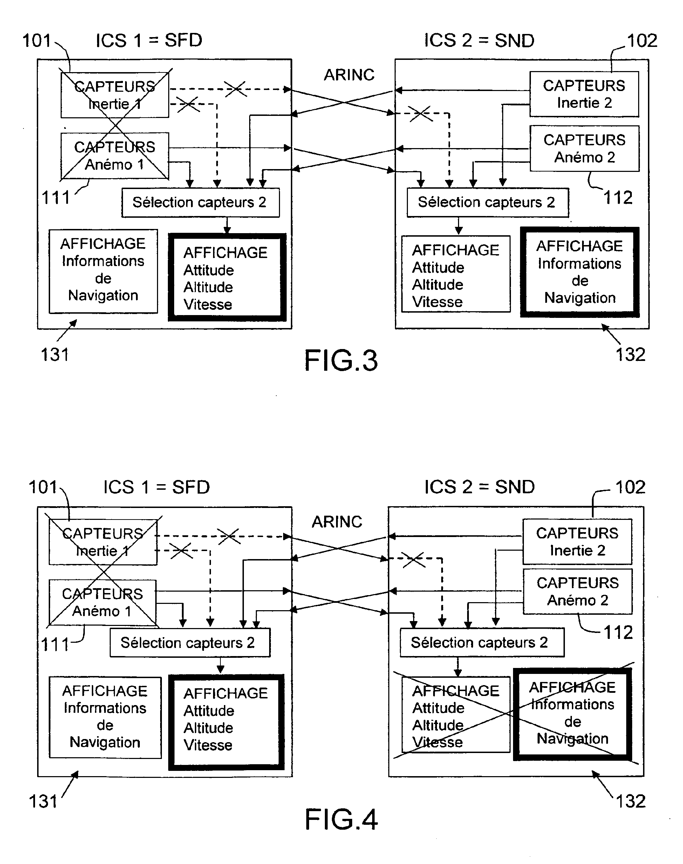

La figure 3 représente toujours le système de la figure 1 dans lequel les capteurs d'inertie 101 et les capteurs anémobarométriques 111 de l'instrument combiné de secours ICS1 sont en panne. Ici encore le système demeure complètement opérant et la détermination des paramètres de vol se fait à partir des capteurs 102 et 112 de l'instrument combiné de secours ICS2. En l'absence de l'invention, et en utilisant deux instruments combiné de secours couplé, il était demandé au pilote de reconfigurer le système pour ne permettre l'affichage des paramètres de vol que sur l'instrument combiné comportant les capteurs en état de fonctionner, c'est à dire l'instrument combiné ICS2. En mettant en oeuvre l'invention, les deux instruments combinés de secours ICS1 et ICS2 peuvent poursuivre l'affichage des paramètres de vol sans nécessiter l'intervention d'un pilote. L'instrument combiné de secours ICS1 se comporte alors comme un répétiteur des paramètres de vol déterminés à partir des informations délivrées par les capteurs 102 et 112 de l'instrument combiné de secours ICS2.

La figure 4 représente le système de la figure 1 dans lequel les capteurs d'inertie 101 et les capteurs anémobarométriques 111 de l'instrument combiné de secours ICS1 ainsi que les moyens d'affichage 132 de l'instrument combiné de secours ICS2 sont en panne. L'instrument combiné de secours ICS2 n'est plus utilisable par le pilote du fait de la panne de ses moyens d'affichage. Cependant, l'instrument combiné de secours ICS1 peut être configuré de façon à afficher les paramètres de vol obtenus à partir des capteurs de l'instrument combiné de secours ICS2. Autrement dit, lors d'une panne des moyens d'affichage d'un des instruments combinés, par exemple ICS2, le procédé consiste à permettre l'affichage des paramètres de vol sur les moyens d'affichage de l'autre instrument combiné, en l'occurrence ICS1, quels que soient les capteurs sélectionnés.

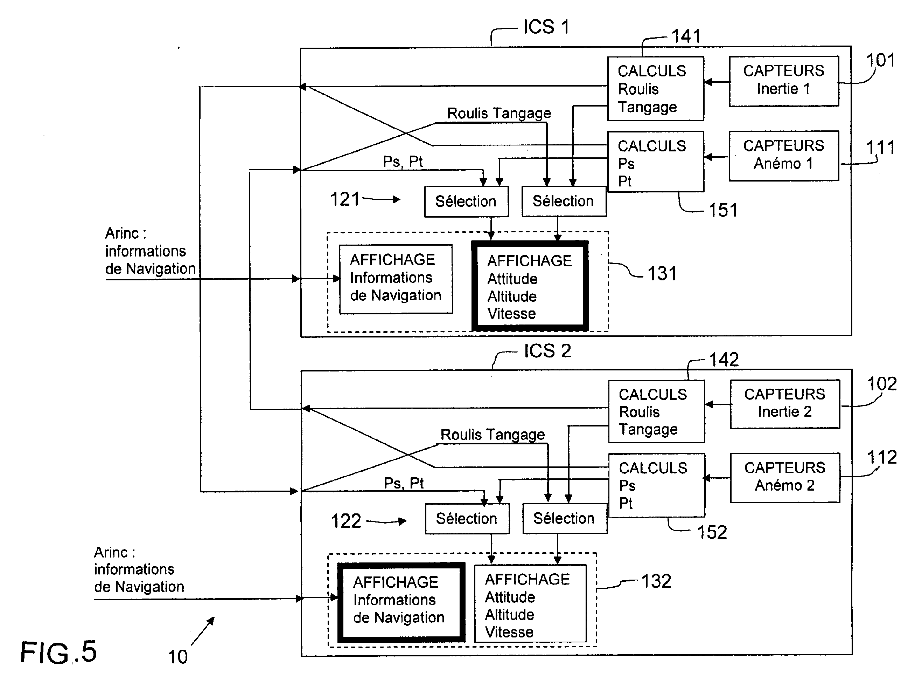

La figure 5 représente de façon plus détaillée le système de la figure 1. Chaque instrument combiné de secours ICS1 et ICS2 comprend un calculateur associé aux différents capteurs. Plus précisément, le calculateur de l'instrument combiné de secours ICS1 comprend des moyens de calcul 141 reliés au capteur d'inertie 101 et permettant de déterminer le roulis et le tangage de l'aéronef ainsi que des moyens de calcul 151 reliés aux capteurs anémobarométriques 111 et permettant de déterminer la pression statique Ps et la pression totale Pt de l'aéronef. De même, le calculateur de l'instrument combiné de secours ICS2 comprend des moyens de calcul 142 reliés au capteur d'inertie 102 et permettant de déterminer le roulis et le tangage de l'aéronef ainsi que des moyens de calcul 152 reliés aux capteurs anémobarométriques 112 et permettant de déterminer la pression statique Ps et la pression totale Pt de l'aéronef. Les modules de sélection 121 et 122 reçoivent le roulis, le tangage, les pressions statique et dynamique déterminés par les différents moyens de calcul 141, 142, 151 et 152. A chaque fois que deux paramètres équivalents, par exemple deux valeurs du roulis, sont présentés aux moyens de sélection 121 et 122, les moyens de sélection choisissent en priorité le paramètre déterminé par l'instrument combiné de secours ICS1 tant que le (ou les) capteur associé n'est pas déclaré en panne. Lors d'une panne d'un capteur, sur l'un ou l'autre des instruments combinés de secours, un label indiquant la panne est transmis par les moyens de communication 10 à l'autre instrument combiné de secours et notamment à son module de sélection afin qu'il choisisse le paramètre déterminé à partir du capteur équivalent de l'autre instrument combiné de secours.

Ensuite, les moyens de sélection 121 et 122 transmettent les paramètres choisis aux moyens d'affichage, respectivement 131 et 132 pour élaborer et afficher les paramètres de vol, attitude, altitude et vitesse de l'aéronef.

Par ailleurs, chaque instrument combiné de secours, reçoit par les moyens de communication 10 des paramètres de navigation, notamment en provenance d'un pilote automatique de l'aéronef. Les informations de navigation peuvent également être affichées sur les moyens d'affichage 131 ou 132. Sur la figure 5, l'instrument combiné de secours ICS1 affiche les paramètres de vol et l'instrument combiné de secours ICS2 affiche les paramètres de navigation. Ce choix d'affichage est symbolisé sur la figure 5 par des cadres en trait gras. En l'absence de l'invention, chacun des deux instruments combiné de secours doit impérativement afficher des paramètres différents, soit des paramètres de vol soit des paramètres de navigation. Grâce à l'invention, il devient possible d'afficher les paramètres de vol simultanément sur les deux instruments combinés de secours sans risquer des valeurs différentes entre les paramètres affichés sur les deux instruments.

Les deux instruments combiné de secours ICS1 et ICS2 comportent chacun des moyens de réglage de la pression barométrique. Ces moyens sont manoeuvrés par le pilote en fonction d'informations reçues d'une station au sol sur la pression barométrique locale. Le réglage de la pression barométrique influe directement sur l'altitude déterminée par les moyens de détermination des paramètres de vol. Avantageusement, le système comporte des moyens d'échange de la pression barométrique réglée afin que le dernier réglage effectué sur l'un des instruments combinés de secours ICS1 ou ICS2 soit directement transmis à l'autre instrument combiné de secours. Cela permet d'éviter de faire deux fois le réglage.

## Revendications

1. Système comprenant deux instruments combinés (ICS1, ICS2) montés à bord d'un aéronef, et des moyens de communication (10) entre les deux instruments combinés (ICS1, ICS2), chaque instrument combiné (ICS1, ICS2) comportant des moyens autonomes (101, 111, 141, 151 ; 102, 112, 142, 152) de détermination des paramètres de vol, vitesse, altitude et attitude de l'aéronef et des moyens d'affichage (131, 132) soit des paramètres de vol soit de paramètres de navigation de l'aéronef, les moyens autonomes de détermination des paramètres de vol comportant des capteurs d'inertie (101, 102) et anémobarométriques (111, 112), **caractérisé en ce qu'**il comprend en outre un module de sélection (121, 122) permettant de choisir, parmi les capteurs (101, 111 ; 102, 112) des deux instruments combinés (ICS1, ICS2), ceux retenus pour la détermination des paramètres de vol.

2. Système selon la revendication 1, **caractérisé en ce que** les deux instruments combinés (ICS1, ICS2) sont identiques et **en ce que** chaque instrument combiné (ICS1, ICS2) comprend un module de sélection (121, 122).

3. Système selon l'une des revendications précédentes, **caractérisé en ce que** chaque instrument combiné (ICS1, ICS2) comprend des moyens de réglage de la pression barométrique et **en ce que** le système comporte des moyens d'échange (10) de la pression barométrique réglée afin que le dernier réglage effectué sur l'un des instruments combinés (ICS1, ICS2) soit directement transmis à l'autre instrument combiné (ICS1, ICS2).

4. Procédé de détermination de paramètres de vol d'un aéronef sur un système comprenant deux instruments combinés (ICS1, ICS2) montés à bord de l'aéronef, et des moyens de communication (10) entre les deux instruments combinés (ICS1, ICS2), chaque instrument combiné (ICS1, ICS2) comportant des moyens autonomes (101, 111, 141, 151 ; 102, 112, 142, 152) de détermination des paramètres de vol, vitesse, altitude et attitude de l'aéronef et des moyens d'affichage (131, 132) soit des paramètres de vol soit de paramètres de navigation de l'aéronef, les moyens autonomes (101, 111, 141, 151 ; 102, 112, 142, 152) de détermination des paramètres de vol comportant des capteurs d'inertie (101, 102) et anémobarométriques (111, 112), **caractérisé en ce qu'**il consiste à sélectionner parmi les capteurs (101, 111 ; 102, 112) des deux instruments combinés (ICS1, ICS2), ceux retenus pour la détermination des paramètres de vol en fonction de leur disponibilité et à afficher sur les moyens d'affichage (131, 132) de l'un quelconque des instruments combinés (ICS1, ICS2) ou des deux instruments combinés (ICS1, ICS2) les paramètres de vol déterminés.

5. Procédé selon la revendication 4, **caractérisé en ce que** lorsque des capteurs (101, 111 ; 102, 112) équivalents sont disponibles sur les deux instruments combinés (ICS1, ICS2), la sélection se fait sur les capteurs (101, 111 ; 102, 112) d'un instrument combiné (ICS1) prédéfini.

6. Procédé selon l'une quelconque des revendications 4 ou 3, **caractérisé en ce qu'**il consiste, lors d'une panne d'un capteur (101, 111 ; 102, 112) d'un des instruments combinés (ICS1, ICS2), à sélectionner le capteur (101, 111 ; 102, 112) équivalent de l'autre instrument combiné.

7. Procédé selon l'une quelconque des revendications 4 ou 3, **caractérisé en ce qu'**il consiste, lors d'une panne des moyens d'affichage (132) d'un des instruments combinés (ICS2), à permettre l'affichage des paramètres de vol sur les moyens d'affichage (131) de l'autre instrument combiné (ICS1) quels que soient les capteurs sélectionnés.

## Claims

1. A system comprising two combined instruments (ICS1, ICS2) mounted on board an aircraft, and means of communicating (10) between the two combined instruments (ICS1, ICS2), each combined instrument (ICS1, ICS2) comprising autonomous means (101, 111, 141, 151; 102, 112, 142, 152) of determining the flight, speed, altitude and attitude parameters of the aircraft and means of displaying (131, 132) either the flight parameters or the navigation parameters of the aircraft, the autonomous means of determining the flight parameters comprising inertia (101, 102) and anemobarometric (111, 112) sensors, **characterised in that** it further comprises a selection module (121, 122) allowing selection, from the sensors (101, 111; 102, 112) of the two combined instruments (ICS1, ICS2), of those sensors used for determining flight parameters.

2. The system according to claim 1, **characterised in that** the two combined instruments (ICS1, ICS2) are identical and **in that** each combined instrument (ICS1, ICS2) comprises a selection module (121, 122).

3. The system according to one of the previous claims, **characterised in that** each combined instrument (ICS1, ICS2) comprises means of adjusting the atmospheric pressure and **in that** the system comprises means of exchanging (10) the adjusted atmospheric pressure, so that the most recent adjustment performed on one of the combined instruments (ICS1, ICS2) is transmitted directly to the other combined instrument (ICS1, ICS2).

4. A process of determining the flight parameters of an aircraft in a system comprising two combined instruments (ICS1, ICS2) mounted on board the aircraft, and means of communicating (10) between the two combined instruments (ICS1, ICS2), each combined instrument (ICS1, ICS2) comprising autonomous means (101, 111, 141, 151; 102, 112, 142, 152) of determining the flight, speed, altitude and attitude parameters of the aircraft and means of displaying (131, 132) either the flight parameters or the navigation parameters of the aircraft, the autonomous means (101, 111, 141, 151; 102, 112, 142, 152) of determining the flight parameters comprising inertia (101, 102) and anemobarometric (111, 112) sensors, **characterised in that** it consists in selecting, from the sensors (101, 111; 102, 112) of the two combined instruments (ICS1, ICS2), those sensors used for determining flight parameters depending on their availability and displaying the determined flight parameters on the means of displaying (131, 132) parameters on either one of the combined instruments (ICS1, ICS2) or both combined instruments (ICS1, ICS2), .

5. The process according to claim 4, **characterised in that** when equivalent sensors (101, 111; 102, 112) are available on the two combined instruments (ICS1, ICS2), the selection is made from the sensors (101, 111; 102, 112) of a predefined combined instrument (ICS1).

6. The process according to any one of claims 3 or 4, **characterised in that** it consists in, in the event of a failure in one of the sensors (101, 111; 102, 112) of one of the combined instruments (ICS1, ICS2), selecting the equivalent sensor (101, 111; 102, 112) from the other combined instrument.

7. The process according to any one of claims 3 or 4, **characterised in that** it consists in, in the event of a failure in the means of displaying (132) parameters of one of the combined instruments (ICS2), allowing the flight parameters to be displayed on the means of displaying (131) parameters of the other combined instrument (ICS1), irrespective of the selected sensors.

## Patentansprüche

1. System, das zwei an Bord eines Luftfahrzeugs montierte kombinierte Instrumente (ICS1, ICS2) sowie Mittel zur Kommunikation (10) zwischen den beiden kombinierten Instrumenten (ICS1, ICS2) umfasst, wobei jedes kombinierte Instrument (ICS1, ICS2) autonome Mittel (101, 111, 141, 151; 102, 112, 142, 152) zum Bestimmen der Flug-, Geschwindigkeits-, Höhen- und Lageparameter des Luftfahrzeugs sowie Anzeigemittel (131, 132) entweder der Flugparameter oder der Navigationsparameter des Luftfahrzeugs umfasst, wobei die autonomen Mittel zum Bestimmen der Flugparameter Trägheitssensoren (101, 102) sowie Wind- und Luftdrucksensoren (111, 112) umfassen, **dadurch gekennzeichnet, dass** es ferner ein Auswahlmittel (121, 122) umfasst, mit dem aus den Sensoren (101, 111; 102, 112) der beiden kombinierten Instrumente (ICS1, ICS2) die zum Bestimmen der Flugparameter ausgewählt werden können.

2. System nach Anspruch 1, **dadurch gekennzeichnet, dass** die beiden kombinierten Instrumente (ICS1, ICS2) identisch sind, und **dadurch**, dass jedes kombinierte Instrument (ICS1, ICS2) ein Auswahlmodul (121, 122) umfasst.

3. System nach irgendeinem der vorherigen Ansprüche, **dadurch gekennzeichnet, dass** jedes kombinierte Instrument (ICS1, ICS2) Mittel zum Regeln des Barometerdrucks umfasst, und **dadurch**, dass das System Mittel (10) zum Austauschen des geregelten Barometerdrucks umfasst, so dass der letzte Regeleingriff in eines der kombinierten Instrumente (ICS1, ICS2) direkt zu dem anderen kombinierten Instrument (ICS1, ICS2) übertragen wird.

4. Verfahren zum Bestimmen von Flugparametern eines Luftfahrzeugs an einem System, das zwei an Bord des Luftfahrzeugs montierte kombinierte Instrumente (ICS1, ICS2) sowie Mittel zur Kommunikation (10) zwischen den beiden kombinierten Instrumenten (ICS1, ICS2) umfasst, wobei jedes kombinierte Instrument (ICS1, ICS2) autonome Mittel (101, 111, 141, 151; 102, 112, 142, 152) zum Bestimmen der Flug-, Geschwindigkeits-, Höhen- und Lageparameter des Luftfahrzeugs sowie Mittel (131, 132) zum Anzeigen entweder der Flugparameter oder der Navigationsparameter des Luftfahrzeugs umfasst, wobei die autonomen Mittel (101, 111, 141, 151; 102, 112, 142, 152) zum Bestimmen der Flugparameter Trägheitssensoren (101, 102) sowie Wind- und Luftdrucksensoren (111, 112) umfassen, **dadurch gekennzeichnet, dass** es darin besteht, aus den Sensoren (101, 111; 102, 112) der beiden kombinierten Instrumente (ICS1, ICS2) die zum Bestimmen der Flugparameter in Abhängigkeit von ihrer Verfügbarkeit auszuwählen und die bestimmten Flugparameter auf den Anzeigemitteln (131, 132) eines der kombinierten Instrumente (ICS1, ICS2) oder beider kombinierter Instrumente (ICS1, ICS2) anzuzeigen.

5. Verfahren nach Anspruch 4, **dadurch gekennzeichnet, dass**, wenn auf den beiden kombinierten Instrumenten (ICS1, ICS2) äquivalente Sensoren (101, 111; 102, 112) verfügbar sind, die Sensoren (101, 111; 102, 112) eines vordefinierten kombinierten Instruments (ICS1) ausgewählt werden.

6. Verfahren nach Anspruch 4 oder 3, **dadurch gekennzeichnet, dass** es darin besteht, bei einem Ausfall eines Sensors (101, 111; 102, 112) eines der kombinierten Instrumente (ICS1, ICS2) den äquivalenten Sensor (101, 111; 102, 112) des anderen kombinierten Instruments zu wählen.

7. Verfahren nach Anspruch 4 oder 3, **dadurch gekennzeichnet, dass** die Flugparameter bei einem Ausfall der Anzeigemittel (132) eines der kombinierten Instrumente (ICS2) unabhängig davon, welche Sensoren gewählt sind, auf den Anzeigemitteln (131) des anderen kombinierten Instruments angezeigt werden können.
